(19) **Europäisches Patentamt**

**European Patent Office**

**Office européen des brevets**

(11) **EP 1 174 460 A1**

(12) **EUROPEAN PATENT APPLICATION**

| | |
|---|---|
| (43) Date of publication:<br>**23.01.2002 Bulletin 2002/04** | (51) Int Cl.7: **C08K 3/22**, C08L 23/00 |

(21) Application number: **00115710.6**

(22) Date of filing: **21.07.2000**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(71) Applicant: **A. Schulman Plastics N.V.**<br>**2880 Bornen (BE)**<br><br>(72) Inventors:<br>• **Van Lent, Johny**<br>**2880 Bornem (BE)** | • **Janssens, Marcel**<br>**9200 Dendermonde (BE)**<br><br>(74) Representative:<br>**Sternagel, Fleischer, Godemeyer & Partner**<br>**Patentanwälte**<br>**An den Gärten 7**<br>**51491 Overath (DE)** |

(54) **Polyolefin compound with a dark-coloring pigment**

(57)     The present invention relates to polyolefin compounds comprising a dark coloring pigment 0.01 to 70 wt.-% of chromium-iron oxide. The invention further relates to a process for the improvement of heat and light reflective properties of dark colored films or molding and to films or moldings made from the polyolefin compound.

**EP 1 174 460 A1**

**Description**

The present invention relates to polyolefin compounds comprising a dark-coloring pigment, to a process for the reduction of light absorption of dark-colored films or moldings made from that polyolefin compound and to films and moldings made from the polyolefin composition.

Since many years, polyolefins are used for packaging of heat sensitive materials. It is well known, that dark articles heat up more than light colored articles. Due to this heat-built-up, packed goods' quality might deteriorate and the packaging might be destroyed in a much shorter time than expected. For instance, for the preservation of cattle food in the agriculture industry, "silage films" are used. These "silage films" are co-extruded polyethylene and/or EVA co-polymer films of 150 to 200 micron consisting of a white layer for heat reflection on the outer side of the film and a black layer on the inner side of the film for maximum opacity. The opacity is needed because vitamins, aminoacids, carbohydrates, etc. in plants might be destroyed by UV-light. The white layer normally is needed in order to reflect the heat coming from the sunlight. The temperature difference between the white side of the film and the black side of the film is enormous. For instance, measured in Belgium, black film surfaces reached temperatures of 70°C, the same films pigmented white remained at 25°C.

The heating of the films has a further disadvantage, namely that the permeability of the films for gas decreases. Thus, the oxygen permeability of polyethylene films at a temperature of 70°C is eight times higher than the permeability for oxygen at 25°C. The permeability coefficient is independent of film thickness, the thickness of the film is half, the transmission rate of a permeating gas doubles. This means, that a black film, when it reaches 70°C on a sunny day, behaves like a film that is eight times thinner.

These factors create a situation where both oxygen permeation is combined with a significant increase in bacterial growth and chemical activity due to higher temperatures. A further negative factor of black or dark films is that heat will dissipate from the film in the silaged food. This causes a kind of "caramelisation" of the sugars in the food. This caramelised layer can reach up to 10 cm of thickness. Also, a certain degree of drying out is obtained, but as temperature drops during the nights, severe water condensation takes place, which creates an ideal environment for spoilage due to bacterial activity.

White silage films have a further optical disadvantage that they show up too much in the landscape with their white surface and environmentalists are pushing to change the silage color from white or black to dark green. But the dark green films have the same disadvantages described above like the black films, which means that they are heating up too much, causing deterioration of the animal food and the film is UV degrading too fast due to the fast consumption of the anti-oxidants.

But not only in the field of films for agricultural use, the use of dark colored films is problematic. Also, the production of moldings like bottles or containers, which are normally made from dark colored blown high-density polyethylens, have certain disadvantages arising from the heating-up of the moldings. Such containers are often used to protect oils and other chemicals, they are also used as rubbish bins. The heat build-up of such bottles or rubbish bins causes several problems like decomposition of the chemicals or liquids stored in the containers. In the case in which rubbish bins are used for biological waste, the heating-up of these containers accelerates biological decomposition processes, which are problematic from a hygienic point of view and cause severe odors developing from the biological deterioration processes.

Therefore, the technical object of the invention is to provide a polyolefin compound from which dark colored films or moldings can be made, having the heat and light reflective properties of white colored films or moldings.

Normally, dark colors are always made by using organic and/or inorganic pigments in combination with carbon black. By the present inventors it was found that the carbon black is mainly responsible for the high heat build-up in the polyolefin packaging. Therefore, carbon black was replaced by a chromium-iron oxide pigment. The polyolefin compound comprises 0.01 to 70 wt-%, preferably 0.1 to 40 wt-% of the oxide pigment. In a preferred embodiment, the pigment is a mixed metal oxide pigment of the formula $(Fe, Cr)_2O_3$. The pigment C.I. Pigment Brown, 29, 77500 is the preferred used pigment.

The term "dark-coloring" used throughout the specification is defined according to the CIELAB colorsphere using three-dimensional color coordinates, L for lightness, a for axis green-red and b for axis yellow-blue. Dark colors in the sense of the invention are colors having an L-value below 50 (L = 100 is absolutely white, L = 0 is absolutely black).

By adding this pigment to a polyolefin compound, it was found that films and moldings made from this polyolefin had similar heat and light reflective properties like white color films or moldings. Consequently, the heat build-up when exposed to sunlight was much lower than for films or molding containing carbon black as pigment. A further surprising property was, that the UV stabilisation was also increased due to a lower oxidation rate of the polymer, because the films or moldings heat up less.

In a preferred embodiment, the polyolefin compound is selected from the group comprising low-density polyethylene, high-density polyethylene, ethylene vinylacetate copolymers, ethylene(meth)acrylate copolymer, block copolymer polypropylene and random copolymer polypropylene.

The polyolefin compound can further contain usual additives like UV-stabilizer, further organic and/or inorganic pigments for the coloration of the polymer compound and anti-oxidants. When using further organic and/or inorganic pigments, the use of carbon black or other carbon containing pigments should be avoided.

In a preferred embodiment, the polyolefin compound contains 0.1 to 20 wt-% of a UV-stabilizer, preferably a HALS stabilizer (Hindred Amine Light Stabilizers) or a UV-stabilizer of the benzophenone or benzotriazole type. As organic and/or inorganic pigments, usual pigments can be used, which are known for the coloration of polymer compounds, except carbon black or carbon containing pigments. The pigments are preferably used in an amount of 0.1 to 60 wt-% of the polyolefin compound. Anti-oxidants can also be used in an amount of 0 to 10 wt-%.

The polyolefin compound is produced by introducing the pigment in the polyolefin either by compounding it directly according to known methods in the resin or as a preferred embodiment by using the same pigment in masterbatch form. Masterbatches contain additives in a higher concentration and are normally used to obtain a better distribution of the additives in polymer compounds. The masterbatches normally contain a higher amount of the additives and a polymer. The masterbatch is then added to the base polymer. The typical addition rate is 0.5 to 30 wt-% of the final polymer. Thus, the masterbatch in this case is a carrier resin containing one or more pigments and or additives which impart color and/or special properties like anti-UV, anti-slip, anti-blocking properties, etc. to the basic polymer.

The polyolefin compound according to the invention can also be produced by using a masterbatch. The masterbatch contains 10 to 70 wt-%, preferably 10 to 30 wt-% of the dark coloring pigment chromium-iron-oxide. The remaining amount is the base polymer and the usual coloring pigment. This masterbatch is mixed with the base polymer with an addition rate of 0.5 to 30 wt.-% of the final polymer.

It is also possible to introduce the pigment directly without using a masterbatch in the polyolefin compound. The concentration of the pigment is in this case preferably 0.01 to 20 wt-%, most preferably 1 to 10 wt-%, related to the polyolefin compound.

From the polyolefin compound produced by the above production method, films and moldings can be made in the usual way. By testing the heat reflective properties of the films and moldings of the invention, it was found that the films and moldings show a similar heat and light reflective property like white colored films and moldings. For example, the surface temperature of an LDPE film decreased from 36.1°C to 21.3°C in a film with a pigment according to the invention. A white film also shows a surface temperature of 21.1°C. Similar results were achieved by testing moldings containing carbon black as pigment and the pigment according to the invention. It was found that the surface temperature in a carbon black containing molding was 38.4°C and in a molding with a pigment according to the invention 19.6°C. A similar white molding also had a temperature of 19.4°C. Furthermore, in both test samples the UV stability of the film or moldings according to the invention compared with the films or moldings containing carbon black was much higher.

A further object of the present invention is a process for the improvement of heat and light reflective properties of dark colored films or moldings, wherein the polymer compound where the film or molding is made from, comprises as a dark coloring pigment 0.1 to 70 wt-%, preferably 0.1 to 40 wt-%, of chromium-iron-oxide of the formula $(Fe, Cr)_2O_3$. In a most preferred embodiment, the dark colored pigment used is C.I. Pigment Brown 29, 77500.

By the following examples the advantages and properties of the invention are described in detail.

**Examples**

*Measurement according to ASTM D4803-89*

The test described by ASTM D4803-89 uses NIR heat lamp to irradiate a test sample. The lamps' spectral output curve indicates how much light at each wavelength falls on the sample. Measuring the spectral reflectance of the sample over the wavelength range from 200 to 2500 nm shows how much light is absorbed at each wavelength (one-reflectance) multiplying the relative energy of the incident light at a given wavelength by the fraction absorbed at that wavelength gives a measure of the energy absorbed at each wavelength. If these are added up over all wavelengths, the sum represents a total amount of energy absorbed over the whole wavelength region. This should have a direct relationship to heat build-up of a sample.

Specifically, the relative intensity of the heatlamp used at each 20 nm interval was multiplied by 1 minus the fractional reflectance of the sample at that wavelength and summed these values from Lambda = 200 nm to 2500 nm to calculate a total energy absorbed value, which was called "intensity factor", the calculation for the intensity factor is described by equation 1,

$$IF = \sum_{\lambda = 200}^{2500} (1-R_\lambda)L_\lambda$$

wherein

IF = Intensity Factor
$R_\lambda$ = fractional reflectance of the sample at 20 nm intervals
$L_\lambda$ = relative intensity of the heatlamp at 20 nm intervals.

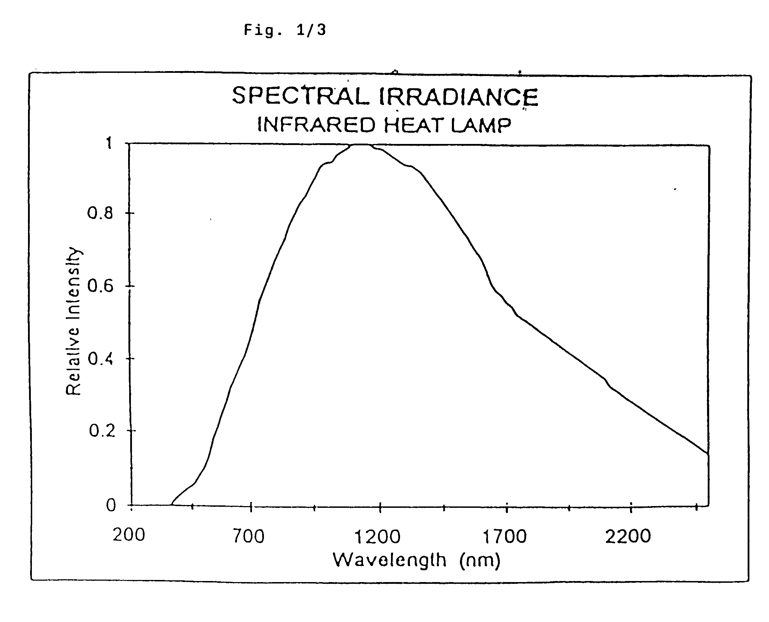

For the experiments, a source lamp was used at the sample distance of 508 mm rather than 394 mm. The heat lamp used was a Silvania T-5746 Clear 250 W with the spectral irradiance shown in Fig. 1.

The intensity factor is directly related to the heat build-up of the sample as measured in the ASTM D4803-89 test. Similar assumptions have been used by other researchers to calculate maximum temperatures that colored plastic parts can achieve when exposed to sunlight (B. Donald, R. Mathew, SPE ANTEC Technical Papers 50, 906, 1992).

Samples were prepared by dispersing the pigments first into a masterbatch form and then diluting them at 0.1 to 30 wt-%, or more specifically at 5 wt-% in a polyolefin base resin which is then transformed by extrusion, co-extrusion, injection molding, blow molding, or any other non-transforming method into a final packaging article which, for testing purposes, will be represented by sample plaques of 1 mm thickness x 100 mm x 100 mm.

Spectral reflectance curves were obtained using a Perkin Elmer Lambda 9 spectrophotometer equipped with an integrating sphere detector. Scans were made from 200 nm to 2500 nm with data points collected each 20 nm.

Calculation of ASTM D4803-89 heat build-up was done according to the procedures specified by the test method, which is

$$\text{Delta T} = \frac{\text{Delta Tlu}}{\text{Delta Tlb}}\text{Delta Tb}$$

where:

Delta T = predicted heat build-up of the sample due to heating by the sun
Delta Tlu = temperature rise above ambient in the laboratory for the specimen
Delta Tlb = temperature rise above ambient temperature for a black control sample
Delta Tb = heat build-up for a black control sample under controlled conditions due to absorption of the sun's energy (= 41°C).

The Intensity Factor IF is calculated according to Equation 1.

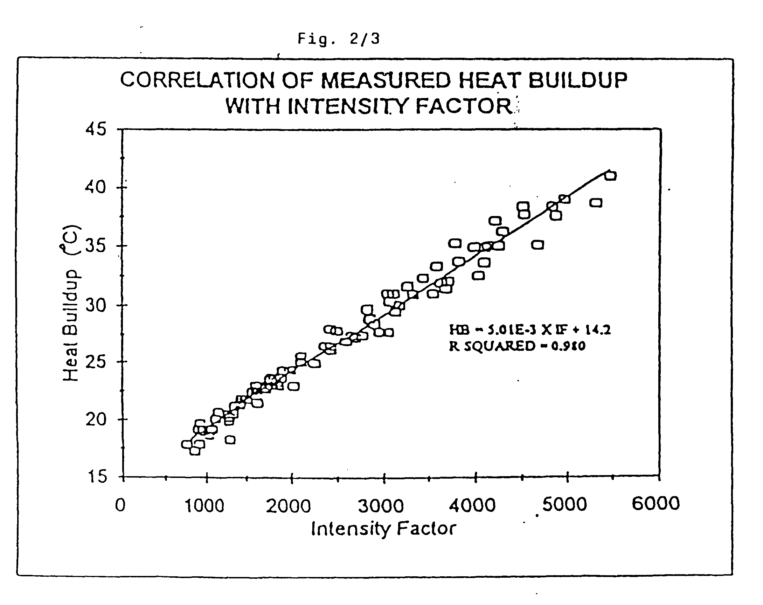

The relationship between the Intensity Factor and the heat build-up has been realized by making dark colored test plaques combining all possible organic and inorganic pigments and blends with the pigment of C.I: Pigment Brown 29, 77500. A good representation of color space was achieved by preparing sample plaques of many hues, darknesses and chromaticities, including blacks, white, grays, brown, reds, yellows, greens and blues. For each sample, the predicted exterior heat build-up was measured according to ASTM D4803-89. Results are shown in Fig. 2. Fig.2 shows a plot of the heat build-up vs. Intensity Factor for all samples. The data fall on a straight line with very good correlation. The linear regression analysis gives an R2 value of 0.980. The results show a direct correlation between the amount absorbed, as quantified by the Intensity Factor, and the heat build-up.

*Example 1*

A darkgreen masterbatch no. 1 was prepared containing 30 wt-% Chromium/Titanium yellow, 9 wt.-% Titaniumdioxide, 5 wt.-% Carbonblack, 1 wt.-% Ironoxide red, 1 wt.-% anti-oxidants, 10 wt.-% HALS UV-stabilizer, the balance being LDPE blown film grade.

Secondly, a countertype masterbatch no. 2 according to the invention of the same color was made containing 25 wt.-% Chromium/Titanium yellow, 7 wt.-% Titaniumdioxide, 20 wt.-% Pigment Brown 29, 77500, 1 wt.-% Phtalocyaningreen, 1 wt.-% antioxidant, 10 wt.-% HALS-UV stabilizer, the balance being LDPE blown film grade.

These masterbatches were diluted at 5 wt.-% in LDPE and transformed into a 150 micron blown film. These films were tested for their intensity factor and UV-stability in a WeatherOmeter CI 4000 (hours until 50% residual elongation).

| 5 wt.-% Darkgreen Masterbatch with | | | |
|---|---|---|---|
| | Carbon Black | Pigment C.I. Brown 29, 77500 | White |
| | (no. 1) | (no. 2) | |
| Intensity Factor | 5500 | 1200 | 1180 |
| Surface temp. | 36.1°C | 21.3°C | 21.1°C |
| UV Stability- Hours WOM | 1430 | 2050 | 2100 |

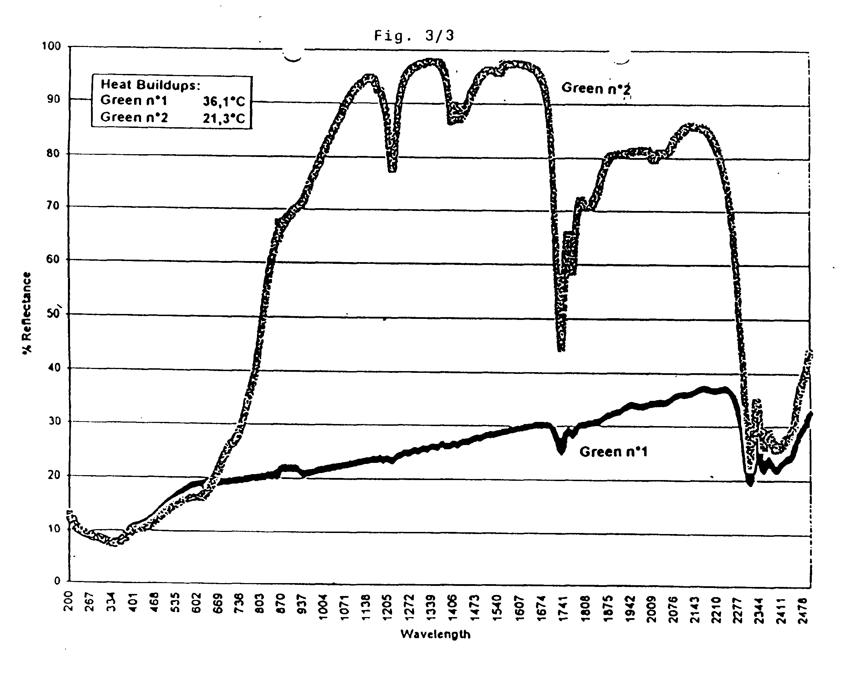

The results are shown in Fig. 3. It was found that the film containing the pigment of the invention had a much lower surface temperature, caused by a higher reflectance, than the carbon black containing film.

Example 2

Darkgrey masterbatches were prepared using, in no. 3, a combination of 50 wt.-% Titaniumdioxide and 7 wt.-% Carbon black plus 2 wt.-% HALS-UV stabilizer, and in no. 4, a combination of 40 wt.-% Titaniumoxide and 25 wt.-% of Pigment C.I. Brown 29, 77500 plus 2 wt.-% HALS-UV stabilizer, and the balance being HDPE bottle grade.
Bottles were blown using 5 wt.-% of both masterbatches diluted in a bottle-grade HDPE resin and these bottles were tested for their Intensity Factor and UV-stability in a WOM Cl 4000 (hours until 50 wt.-% residual elongation).

| 5 wt.-% Darkgrey masterbatch with | | | |
|---|---|---|---|
| | Carbon Black | Pigment C.I. Brown 29, 77500 | White |
| | (no. 3) | (no. 4) | |
| Intensity Factor | 4820 | 1075 | 1055 |
| Surface temp. | 38.4°C | 19.6°C | 19.4°C |
| UV Stability (hours WOM) | 3860 | 5100 | 4950 |

The results show that the bottle containing the pigment of the invention has a much lower surface temperature than the bottle containing the pigment carbon black. Furthermore, the UV-stability of the bottle according to the invention is much higher than that of the carbon black containing bottle. The results are similar to the results of white bottles, which were also measured.

**Claims**

1. Polyolefin compound comprising as a dark-coloring pigment 0.01 to 70 wt-% of chromium iron oxide

2. Polyolefin compound according to claim 1, comprising as a dark-coloring pigment 0.1 to 40 wt-% of chromium iron oxide

3. Polyolefin compound according to claim 1 or 2, wherein the pigment is $(Fe,Cr)_2O_3$

4. Polyolefin compound according to claims 1 to 3, wherein the pigment is C.I. Pigment Brown 29, 77500

5. Polyolefin compound according to claims 1 to 4, which is carbon black free

6. Polyolefin compound according to claims 1 to 5, wherein the polyolefin is selected from the group comprising low-density polyethylene, high-density polyethylene, ethylene vinyl acetate copolymers, ethylene (meth)acrylate copolymers, block copolymer polypropylene, random copolymer polypropylene

7. Polyolefin compound according to claims 1 to 6, wherein the compound further comprises 0.1 to 20 wt-% of an UV-stabiliser

8. Polyolefin compound according to claim 7, wherein the UV-stabiliser is a HALS-stabiliser and/or an UV-stabiliser of the benzophenone or benzotriazole type

9. Polyolefin compound according to claims 1 to 8, further comprising 0.1 to 60 wt-% organic and/or inorganic pigments for the coloration of the polymer compound

10. Polyolefin compound according to claims 1 to 9, further comprising 0 to 10 wt-% antioxidants

11. Process for the improvement of heat and light reflective properties of dark colored films or mouldings **characterised in that** the polymer compound according to claims 1 to 10, where the film or moulding is made from, comprises as a dark-coloring pigment 0.01 to 70 wt-% of chromium iron oxide

12. Process according to claim 11, wherein the polyolefin compound comprises as a dark-colored pigment 0.1 to 40 wt-% of chromium iron oxide

13. Process according to claim 11 or 12, wherein the dark-coloring pigment is $(Fe,Cr)_2O_3$

14. Process according to claims 11 to 13, wherein the pigment is C.I.Pigment Brown 29, 77500

15. Process according to claims 11 to 13, wherein carbon black is not used in the process

16. Films obtainable from the polyolefin compound according to claims 1 to 10.

17. Mouldings obtainable from the polyolefin compound according to claims 1 to 10.

Fig. 1/3

SPECTRAL IRRADIANCE
INFRARED HEAT LAMP

CORRELATION OF MEASURED HEAT BUILDUP
WITH INTENSITY FACTOR

HB = 5.01E-3 X IF + 14.2
R SQUARED = 0.980

Heat Buildup (°C)

Intensity Factor

EP 1 174 460 A1

Fig. 3/3

**European Patent Office**

## EUROPEAN SEARCH REPORT

Application Number

EP 00 11 5710

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 779 341 A (COOKSON MATTHEY CERAMICS PLC) 18 June 1997 (1997-06-18) * example 1 * --- | 1-17 | C08K3/22 C08L23/00 |
| X | CHEMICAL ABSTRACTS, vol. 109, no. 16, 17 October 1988 (1988-10-17) Columbus, Ohio, US; abstract no. 130219, XP002158650 * abstract * & JP 62 288655 A (SUMITOMO NAUGATUCK) 15 December 1987 (1987-12-15) ----- | 1-17 | |

TECHNICAL FIELDS SEARCHED (Int.Cl.7)

C08K

The present search report has been drawn up for all claims

| Place of search | Date of completion of the search | Examiner |
|---|---|---|
| THE HAGUE | 26 January 2001 | Friederich, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 00 11 5710

This annex lists the patent family members relating to the patent documents cited in the above-mentioned European search report.
The members are as contained in the European Patent Office EDP file on
The European Patent Office is in no way liable for these particulars which are merely given for the purpose of information.

26-01-2001

| Patent document cited in search report | | Publication date | Patent family member(s) | | Publication date |
|---|---|---|---|---|---|
| EP 0779341 | A | 18-06-1997 | AT | 194159 T | 15-07-2000 |
| | | | DE | 29623880 U | 20-04-2000 |
| | | | DE | 69609040 D | 03-08-2000 |
| | | | ES | 2148690 T | 16-10-2000 |
| | | | PT | 779341 T | 31-10-2000 |
| | | | US | 5795940 A | 18-08-1998 |
| JP 62288655 | A | 15-12-1987 | JP | 5073144 B | 13-10-1993 |

EPO FORM P0459

For more details about this annex : see Official Journal of the European Patent Office, No. 12/82

11